# EUROPÄISCHE PATENTSCHRIFT

(11) **EP 2 675 666 B1**
(45) Veröffentlichungstag und Bekanntmachung des Hinweises auf die Patenterteilung: **11.05.2016**
(21) Anmeldenummer: 11704228.3
(22) Anmeldetag: 17.02.2011
(51) Int. Cl.: B60S 3/04

(54) **RADWASCHVORRICHTUNG**
WHEEL-WASHING APPARATUS
DISPOSITIF DE LAVAGE DE ROUES

(43) Veröffentlichungstag der Anmeldung: 25.12.2013
(73) Patentinhaber: Alfred Kärcher GmbH & Co. KG, 71364 Winnenden (DE)
(72) Erfinder: LANGER, Christian, 86720 Nördlingen (DE); SPECKMAIER, André, 71543 Wüstenrot (DE); HEINZE, Michael, 71282 Hemmingen (DE)
(74) Vertreter: Hoeger, Stellrecht & Partner Patentanwälte mbB
(86) Internationale Anmeldenummer: PCT/EP2011/052379
(87) Internationale Veröffentlichungsnummer: WO 2012/110094

(56) Entgegenhaltungen:
- EP-A2- 1 561 658
- DE-A1- 3 740 627
- DE-U1-202009 011 186
- JP-A- 63 227 449

## Beschreibung

Die Erfindung betrifft eine Radwaschvorrichtung, insbesondere für Kraftfahrzeugräder, umfassend mindestens zwei Waschbürsten, die jeweils um eine Bürstenachse drehend antreibbar sind, wobei sich die Bürstenachsen der mindestens zwei Waschbürsten voneinander unterscheiden, und wobei die mindestens zwei Waschbürsten um eine gemeinsame und von den Bürstenachsen unterschiedliche Zentralachse drehend antreibbar sind.

Eine Radwaschvorrichtung ist in der US 2,025,780 beschrieben und umfasst vier um unterschiedliche Bürstenachsen drehend antreibbare Waschbürsten zum Reinigen der Seitenfläche des zu reinigenden Rades. Eine der Waschbürsten, deren Bürstenachse in Übereinstimmung mit der Radachse des Rades bringbar ist, kann das Rad zum Reinigen mittig kontaktieren. Die übrigen drei Waschbürsten umgeben die erstgenannte Waschbürste in Umfangsrichtung von deren Bürstenachse und können das Rad jeweils außermittig abreinigen.

Eine Radwaschvorrichtung der eingangs genannten Art ist in der DE 20 2009 011 186 U1 beschrieben.

Aufgabe der vorliegenden Erfindung ist es, eine gattungsgemäße Radwaschvorrichtung bereitzustellen, mit der ein besseres Reinigungsergebnis erzielbar ist.

Diese Aufgabe wird bei einer Radwaschvorrichtung der eingangs genannten Art erfindungsgemäß dadurch gelöst, dass mindestens eine Waschbürste einen schief zu ihrer Bürstenachse ausgerichteten Bürstenteller aufweist.

Bei der erfindungsgemäßen Radwaschvorrichtung führen die zumindest zwei Waschbürsten jeweils eine überlagerte Bewegung aus. Jede Waschbürste rotiert um ihre eigene Bürstenachse und zusätzlich um die von der Bürstenachse unterschiedliche gemeinsame Zentralachse der Radwaschvorrichtung. Die gemeinsame Zentralachse kann beispielsweise in Übereinstimmung mit einer Radachse des zu reinigenden Rades gebracht werden. Dies ermöglicht es, das Rad in Umfangsrichtung der Radachse durch mindestens zwei die Zentralachse umlaufende Waschbürsten flächendeckend zu reinigen, wobei durch die Eigendrehung der Waschbürsten um die jeweilige Bürstenachse eine besonders wirkungsvolle Reinigung erzielt werden kann. Wie sich in der Praxis zeigt, können selbst komplex gestaltete Felgen zu reinigender Räder wirkungsvoll gereinigt werden, sogar mit Ausnehmungen oder Hinterschnitten aufweisenden Speichen oder Naben oder im Bereich des Felgenbettes.

Es kann vorgesehen sein, dass die Radwaschvorrichtung drei oder mehr Waschbürsten umfasst. Bei einer konkreten Umsetzung der Radwaschvorrichtung in der Praxis hat es sich als günstig erwiesen, wenn die Radwaschvorrichtung drei jeweils um eine Bürstenachse und um eine von dieser verschiedene gemeinsame Zentralachse drehbare Waschbürsten aufweist.

Mindestens eine Waschbürste weist einen schief zu ihrer Bürstenachse ausgerichteten Bürstenteller auf. "Schief" bedeutet vorliegend, dass der Bürstenteller, an dem die Waschborsten der Waschbürste festgelegt sind, einen Winkel mit der Bürstenachse von weniger als 90° einschließt. Dies führt dazu, dass der Bürstenteller und damit die Waschborsten während der Rotation der Waschbürste um die Bürstenachse eine Taumelbewegung ausführen. Es zeigt sich, dass komplexe Felgenstrukturen wie beispielsweise Hinterschnitte am zu reinigenden Rad noch besser gereinigt werden können.

Günstig ist es, wenn mindestens zwei Waschbürsten unterschiedlich groß ausgebildet sind, beispielsweise mit Bürstentellern unterschiedlichen Durchmessers und/oder Waschborsten unterschiedlicher Länge. Waschbürsten unterschiedlicher Größe können unterschiedliche Reinigungswirkungen auf das zu reinigende Rad ausüben, etwa zum Reinigen unterschiedlicher Strukturen. Eine einheitliche Reinigung des Rades kann dadurch sichergestellt werden, dass die Waschbürsten jeweils um die Zentralachse rotieren.

Es kann vorgesehen sein, dass alle Waschbürsten der Radwaschvorrichtung unterschiedlich groß ausgebildet sind.

Um die konstruktive Ausgestaltung der Radwaschvorrichtung zu vereinfachen, sind vorzugsweise mindestens zwei Waschbürsten identisch zueinander ausgebildet.

Bei einer vorteilhaften Umsetzung der erfindungsgemäßen Radwaschvorrichtung in der Praxis hat es sich als günstig erwiesen, wenn die Radwaschvorrichtung drei Waschbürsten umfasst, von denen zwei identisch zueinander ausgebildet sind. Diese können z.B. Bürstenteller mit einem geringeren Durchmesser als ein Bürstenteller der verbleibenden dritten Waschbürste aufweisen, etwa Durchmesser von ungefähr 11 cm relativ zu einem Durchmesser von ungefähr 15 cm der dritten Waschbürste.

Von Vorteil ist es, wenn zumindest eine Waschbürste die Zentralachse im Querschnitt überdeckt. Dadurch kann bei der Radwaschvorrichtung eine zusätzliche zentrale Waschbürste, deren Bürstenachse mit der Zentralachse zusammenfällt, eingespart werden. Dies vereinfacht die konstruktive Ausgestaltung der Radwaschvorrichtung. Zentral nahe der Radachse gelegene Bereiche des zu reinigenden Rades können mit der mindestens einen die Zentralachse im Querschnitt überdeckenden Waschbürste abgereinigt werden, während sie um die Zentralachse und um ihre eigene Bürstenachse rotiert.

Es kann vorgesehen sein, dass die Radwaschvorrichtung bei einer weiteren bevorzugten Ausführungsform eine Waschbürste umfasst, deren Bürstenachse mit der Zentralachse zusammenfällt.

Bei einer konkreten Umsetzung der Radwaschvorrichtung in der Praxis hat es sich als günstig erwiesen, wenn der Bürstenteller einer Waschbürste einen Winkel von ungefähr 70° bis ungefähr 80° und vorzugsweise 75° mit der Bürstenachse einschließt, beispielsweise bei einer Waschbürste mit einem Durchmesser des Bürstentellers von ungefähr 11 cm.

Vorteilhafterweise umfasst die Radwaschvorrichtung mindestens zwei unterschiedlich große Waschbürsten, von denen die größere Waschbürste einen senkrecht zu ihrer Bürstenachse ausgerichteten Bürstenteller aufweist und von denen die kleinere Waschbürste einen schief zu ihrer Bürstenachse ausgerichteten Bürstenteller aufweist. Durch die Schiefstellung des Bürstentellers der kleineren der mindestens zwei unterschiedlich großen Waschbürsten ist der vorstehend erwähnte Vorteil erzielbar. Die größere Waschbürste weist einen senkrecht zu ihrer Bürstenachse ausgerichteten Bürstenteller auf, so dass während der Eigenrotation der Waschbürste keine Taumelbewegung des Bürstentellers und der Waschborsten ausgeführt wird. Dadurch wird die Annäherung der Radwaschvorrichtung an das zu reinigende Rad nicht durch eine Taumelbewegung des Bürstentellers der größeren Waschbürste behindert. Die Taumelbewegung der kleineren Waschbürste ist hierfür jedoch für die Annäherung weniger störend und kann in Kauf genommen werden, um die vorstehend erwähnte verbesserte Reinigungswirkung zu erzielen.

Zur Vereinfachung der konstruktiven Ausgestaltung der Radwaschvorrichtung ist es günstig, wenn Waschbürsten gleicher Größe jeweils um denselben schiefen Winkel relativ zur jeweiligen Bürstenachse ausgerichtete Bürstenteller aufweisen.

Vorzugsweise sind die Bürstenachsen von mindestens zwei und insbesondere allen Waschbürsten parallel zueinander ausgerichtet. Es zeigt sich, dass beispielsweise unter Einsatz der nachfolgend erläuterten Getriebeeinrichtung dadurch eine konstruktiv einfache Ausgestaltung der Radwaschvorrichtung erzielt werden kann.

Aus demselben Grund ist es von Vorteil, wenn mindestens eine und insbesondere alle Bürstenachsen parallel zur Zentralachse ausgerichtet ist bzw. sind.

Vorteilhafterweise weisen zumindest zwei, und insbesondere alle Bürstenachsen identische Abstände von der Zentralachse auf. Dadurch lässt sich, beispielsweise unter Einsatz der nachfolgend erläuterten Getriebeeinrichtung, eine konstruktiv einfache Ausgestaltung der Radwaschvorrichtung sicherstellen. Die identischen Abstände der mindestens zwei Bürstenachsen können insbesondere unabhängig von der Größe der die jeweiligen Bürstenachsen aufweisenden Waschbürsten sein.

Es kann vorgesehen sein, dass die Bürstenachsen in Umfangsrichtung der Zentralachse gleichmäßige Winkelabstände voneinander aufweisen. Dies gibt die Möglichkeit, die konstruktive Ausgestaltung der Radwaschvorrichtung möglichst einfach zu gestalten und deren Gleichlaufeigenschaften möglichst zu verbessern. Die gleichmäßigen Winkelabstände der Bürstenachsen relativ zueinander in Bezug auf die Zentralachse können unabhängig vom jeweiligen Abstand der Bürstenachse von der Zentralachse und/oder unabhängig vom jeweiligen Durchmesser der die Bürstenachse definierenden Waschbürste sein.

Bevorzugt sind die Drehzahlen von mindestens zwei und insbesondere allen Waschbürsten um die jeweilige Bürstenachse identisch. Beispielsweise betragen die Drehzahlen jeweils ungefähr 100 bis ungefähr 200 Umdrehungen pro Minute, bevorzugt ungefähr 130 bis ungefähr 170 Umdrehungen pro Minute und insbesondere ungefähr 150 bis 160 Umdrehungen pro Minute.

Günstig ist es, wenn die Drehzahlen von mindestens zwei und insbesondere allen Waschbürsten um die Zentralachse identisch sind. Die Drehzahlen können jeweils beispielsweise ungefähr 10 bis ungefähr 50 Umdrehungen pro Minute und bevorzugt ungefähr 30 Umdrehungen pro Minute betragen.

Die mindestens zwei und insbesondere alle mit derselben Drehzahl um die Zentralachse drehbaren Waschbürsten können an einem gemeinsamen drehend antreibbaren Bürstenträger gehalten sein. Dies ermöglicht eine konstruktiv besonders einfache Ausgestaltung der Radwaschvorrichtung.

Von Vorteil ist es, wenn die Drehzahlen der Waschbürsten um die jeweilige Bürstenachse größer sind als die Drehzahlen der Waschbürsten um die Zentralachse. Es zeigt sich, dass dadurch eine bessere Reinigungswirkung erzielt werden kann als im umgekehrten Fall.

Zwei oder mehr Waschbürsten der Radwaschvorrichtung ist, um deren konstruktive Ausgestaltung zu vereinfachen, vorzugsweise eine gemeinsame Antriebseinrichtung zugeordnet.

Es ist insbesondere günstig, wenn die Radwaschvorrichtung eine Antriebseinrichtung sowie eine die Antriebseinrichtung mit den mindestens zwei Waschbürsten koppelnde Getriebeeinrichtung zum Antreiben der Waschbürsten um deren jeweilige Bürstenachse aufweist. Mittels nur einer Antriebseinrichtung können die mindestens zwei Waschbürsten in Rotation um ihre jeweiligen Bürstenachsen versetzt werden. Dies erlaubt es, gesonderte Antriebe für jede der Waschbürsten einzusparen.

Günstigerweise umfasst die Getriebeeinrichtung ein Planetengetriebe, das jeweils mit einer Waschbürste gekoppelte und um sich selbst drehend antreibbare Planetenräder aufweist. Mittels eines Planetengetriebes können die mindestens zwei Waschbürsten konstruktiv einfach in Eigenrotation um ihre jeweiligen Bürstenachsen versetzt werden, indem die mit ihnen jeweils koppelnden Planetenräder drehend angetrieben werden.

Vorzugsweise sind die Planetenräder jeweils drehfest mit einer der Waschbürsten verbunden, um eine Drehbewegung der Planetenräder technisch einfach auf die Waschbürsten zu übertragen. Beispielsweise ist jeder Waschbürste eine an ihrem Bürstenteller festgelegte Bürstenhalterung zugeordnet, die einen das jeweilige Planetenrad tragenden Schaft aufweist.

Von Vorteil ist es, wenn die Getriebeeinrichtung einen Planetenträger umfasst, an dem die Planetenräder drehbar gelagert sind. Dies ermöglicht zum einen eine robuste Bauweise der Getriebeeinrichtung. Zum anderen kann der Planetenträger drehend angetrieben werden, um die mindestens zwei Waschbürsten gemeinsam um die Zentralachse zu rotieren.

Vorzugsweise ist der Planetenträger als das Planetengetriebe zumindest teilweise aufnehmendes Getriebegehäuse ausgestaltet, um einen möglichst wirkungsvollen Schutz der Getriebeeinrichtung vor äußeren Einflüssen, insbesondere Schmutz und Reinigungsflüssigkeit, zu gewährleisten. Das Getriebegehäuse ist beispielsweise trommelförmig ausgestaltet und koaxial zur Zentralachse ausgerichtet. Im Getriebegehäuse sind günstigerweise die bereits erwähnten Planetenräder, das nachfolgend erwähnte Lagerrad und das nachfolgend erwähnte Zugkraftübertragungselement aufgenommen. Das Getriebegehäuse kann von der Antriebseinrichtung drehend angetrieben sein, um als drehbarer Planetenträger die Rotation der mindestens zwei Waschbürsten um die Zentralachse zu ermöglichen.

Bei einer vorteilhaften Ausführungsform der erfindungsgemäßen Radwaschvorrichtung umfasst das Planetengetriebe ein von der Antriebseinrichtung um die Zentralachse drehend antreibbares Antriebsrad, an dem die Planetenräder abwälzen. Das Antriebsrad ist bevorzugt koaxial zur Zentralachse ausgerichtet und drehfest an eine Antriebswelle der Antriebseinrichtung angekoppelt. Durch Abwälzen am Antriebsrad können die Planetenräder und damit die mindestens zwei Waschbürsten in Eigenrotation versetzt werden. Die Planetenräder und das Antriebsrad können zum Abwälzen aneinander als Zahnräder oder als Reibrollen ausgestaltet sein.

Bei einer konstruktiv einfachen Ausgestaltung der Getriebeeinrichtung ist das Antriebsrad ein Sonnenrad des Planetengetriebes, dessen Achse mit der Zentralachse zusammenfällt.

Von Vorteil ist es, wenn das Planetengetriebe ein feststehendes Lagerrad umfasst, an dem die Planetenräder abwälzen. Das Lagerrad ist beispielsweise an einer Trageinrichtung der Radwaschvorrichtung festgelegt und dient als Gegenlager für die Planetenräder. Vom Antriebsrad angetrieben, werden die Planetenräder in Eigenrotation versetzt und zudem in Rotation um die Zentralachse, wobei sie an Antriebsrad und am Lagerrad abwälzen. Das Lagerrad ermöglicht es, einen gesonderten Antrieb zur Rotation der mindestens zwei Waschbürsten um die Zentralachse einzusparen.

Das Lagerrad ist insbesondere dann, wenn das Antriebsrad ein Sonnenrad ist, ein Hohlrad des Planetengetriebes.

Bei einer Variante der vorstehend erläuterten Ausführungsformen der Radwaschvorrichtung kann vorgesehen sein, dass das Antriebsrad ein drehend antreibbares Hohlrad ist und das Lagerrad ein feststehendes Sonnenrad des Planetengetriebes.

Bei einer andersartigen vorteilhaften Ausführungsform der erfindungsgemäßen Radwaschvorrichtung kann wie bereits erwähnt vorgesehen sein, dass der Planetenträger von der Antriebseinrichtung um die Zentralachse drehend antreibbar ist. Dies ermöglicht eine gemeinsame Rotation der mindestens zwei Waschbürsten um die Zentralachse.

Von Vorteil ist es, wenn das Planetengetriebe ein Lagerrad umfasst, relativ zu dem die Planetenräder beabstandet sind, sowie mindestens ein das Lagerrad mit den Planetenrädern koppelndes Zugkraftübertragungselement. Das mindestens eine Zugkraftübertragungselement kann über die Planetenräder und das Lagerrad laufen und mit diesen dabei in kraft- und/oder formschlüssigem Eingriff stehen. Unter Drehung des Planetenträgers um die Zentralachse werden auf diese Weise die Planetenräder und damit die Waschbürsten in Eigenrotation um ihre jeweilige Bürstenachse versetzt, wobei das Lagerrad als Gegenlager für das Zugkraftübertragungselement dient. Das Lagerrad ist vorzugsweise an einer Trageinrichtung der Radwaschvorrichtung festgelegt.

Bevorzugt ist genau ein Zugkraftübertragungselement vorgesehen, das über sämtliche Planetenräder sowie das Lagerrad läuft und diese miteinander koppelt.

Vorzugsweise ist das mindestens eine Zugkraftübertragungselement ein Antriebsriemen, beispielsweise ein Flachriemen, ein Keilriemen oder ein Zahnriemen. In letzterem Fall können die Planetenräder und das Lagerrad jeweils als Zahnräder ausgestaltet sein. Der Einsatz des Antriebsriemens als Zugkraftübertragungselement ist kostengünstig und herstellungstechnisch einfach.

Bei einer Variante der vorstehend erwähnten Ausführungsform der Radwaschvorrichtung kann vorgesehen sein, dass das mindestens eine Zugkraftübertragungselement eine Kette ist, wobei in diesem Fall die Planetenräder und dar Lagerrad ebenfalls als Zahnräder ausgestaltet sind. Auch eine Ausgestaltung des Zugkraftübertragungselementes als Seil ist denkbar.

Die Getriebeeinrichtung kann mindestens ein Spannelement zum Spannen des mindestens einen Zugkraftübertragungselementes umfassen. Dies ermöglicht es, das Zugkraftübertragungselement unter Spannung zu setzen und dadurch eine zuverlässige Zugkraftübertragung zwischen den Planetenrädern und dem Lagerrad sicherzustellen.

Auch bei der Variante der Radwaschvorrichtung, bei der der Planetenträger um die Zentralachse drehend antreibbar ist, kann bei einer vorteilhaften Ausführungsform der Radwaschvorrichtung vorgesehen sein, dass das Planetengetriebe ein Lagerrad umfasst, an dem die Planetenräder abwälzen. Durch Abwälzen an dem vorzugsweise an einer Trageinrichtung der Radwaschvorrichtung festgelegten Lagerrad können die um die Zentralachse rotierenden Planetenräder in Eigenrotation versetzt werden. Dadurch ist die Möglichkeit gegeben, die mindestens zwei Waschbürsten um ihre jeweilige Bürstenachse drehend anzutreiben. Die Planetenräder und das Lagerrad sind zu diesem Zweck beispielsweise als Zahnräder oder als Reibrollen ausgestaltet.

Das vorzugsweise feststehende Lagerrad ist insbesondere ein Sonnenrad des Planetengetriebes. Denkbar ist jedoch auch, dass das vorzugsweise feststehende Lagerrad ein Hohlrad des Planetengetriebes ist.

Vorstehende Ausführungen zeigen, dass vorliegend auch ein Getriebe als Planetengetriebe aufzufassen ist, bei dem die Planetenräder um ein gemeinsames Zentrum rotieren, zu diesem Zweck und/oder zur Erzielung der Eigenrotation aber nicht am Sonnenrad oder am Hohlrad abwälzen. Auch die Ausführungsform der Radwaschvorrichtung, bei der die Planetenräder im Abstand zum Lagerrad angeordnet sind und unter Einsatz des Zugkraftübertragungselementes in Eigenrotation versetzt werden, wird als Planetengetriebe angesehen.

Vorzugsweise umfasst die Getriebeeinrichtung eine von der Antriebseinrichtung antreibbare und längs der Zentralachse ausgerichtete Getriebewelle. Die Getriebewelle kann die Getriebeeinrichtung im Übrigen zentral durchsetzen und auf ihrer den Waschbürsten zugewandten Seite mit dem vorstehend genannten Planetenträger drehfest verbunden sein.

Günstig ist es, wenn die Getriebewelle als Hohlwelle ausgestaltet ist mit mindestens einer Eintrittsöffnung für Reinigungsflüssigkeit auf ihrer den mindestens zwei Waschbürsten abgewandten Seite und mindestens einer Austrittsöffnung für Reinigungsflüssigkeit auf ihrer den mindestens zwei Waschbürsten zugewandten Seite. Reinigungsflüssigkeit kann auf diese Weise durch die Hohlwelle hindurch dem Reinigungsbereich zugeführt werden. Eine gesonderte Zuführleitung für Reinigungsflüssigkeit kann dadurch eingespart werden. Bei der Reinigungsflüssigkeit handelt es sich insbesondere um Wasser, dem zur Steigerung der Reinigungswirkung eine Reinigungschemikalie zugesetzt sein kann.

Vorzugsweise weist die Radwaschvorrichtung eine an der Getriebewelle auf ihrer den mindestens zwei Waschbürsten zugewandten Seite gehaltene und über die Getriebewelle mit Reinigungsflüssigkeit beaufschlagbare Reinigungsflüssigkeitsverteilungseinrichtung auf. Von der Reinigungsflüssigkeitsverteilungseinrichtung, die günstigerweise drehfest an die Getriebewelle angekoppelt ist, kann Reinigungsflüssigkeit gezielt in Richtung des zu reinigenden Rades abgegeben werden.

Von Vorteil ist es, wenn die Reinigungsflüssigkeitsverteilungseinrichtung mindestens einen mit einer Austrittsdüse für Reinigungsflüssigkeit versehenen Sprüharm umfasst. Die Austrittsdüse des Sprüharms ist bevorzugt zwischen zwei Waschbürsten angeordnet, so dass austretende Reinigungsflüssigkeit an den Waschbürsten vorbei auf das zu reinigende Rad abgegeben werden kann. Es sind beispielsweise so viele Sprüharme wie Waschbürsten vorgesehen, wobei die Sprüharme jeweils "auf Lücke" mit den Waschbürsten, bezogen auf einen Umfang der Zentralachse, angeordnet sind.

Die nachfolgende Beschreibung bevorzugter Ausführungsformen der Erfindung dient im Zusammenhang mit der Zeichnung der näheren Erläuterung der Erfindung. Es zeigen:
- Figur 1:: eine Draufsicht auf eine erste bevorzugte Ausführungsform einer erfindungsgemäßen Radwaschvorrichtung;

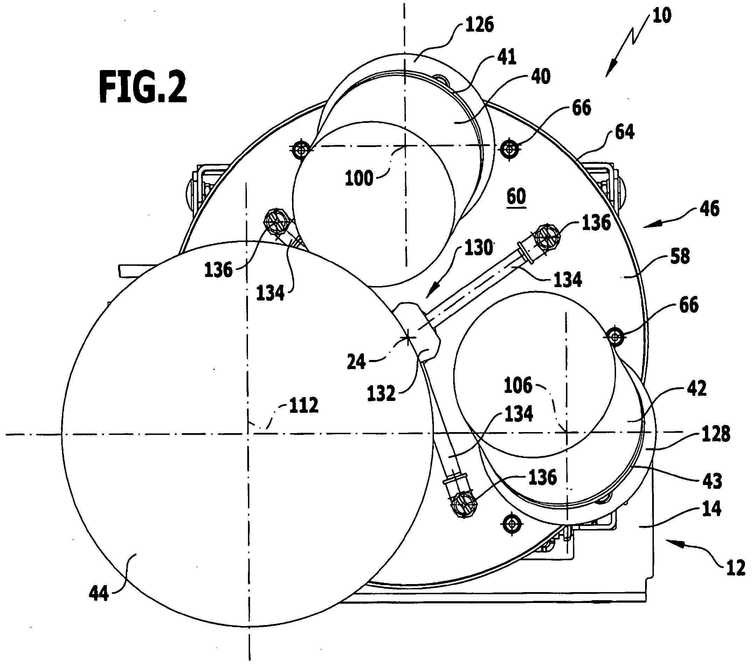

- Figur 2:: eine Vorderansicht der Radwaschvorrichtung aus Figur 1, betrachtet von einem zu reinigenden Rad;

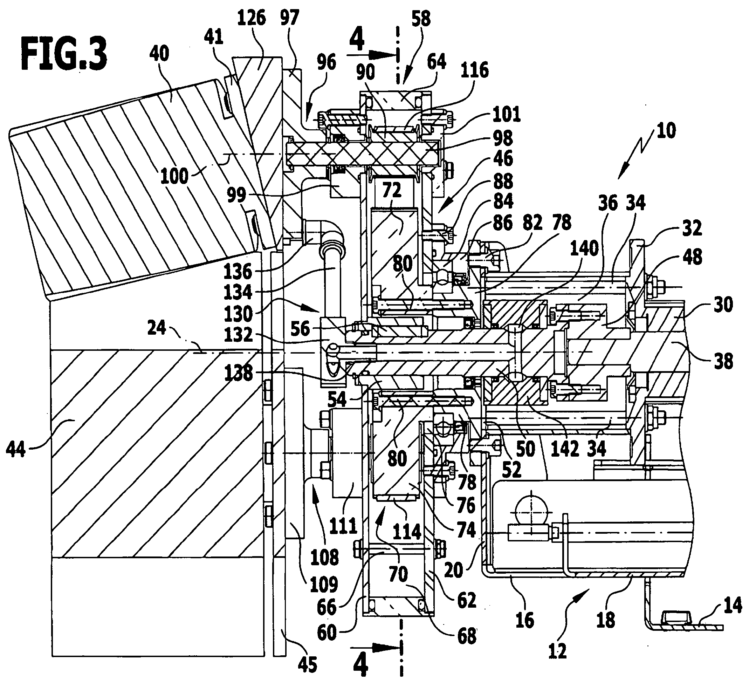

- Figur 3:: eine Schnittansicht längs der Linie 3-3 in Figur 1;
- Figur 4:: eine Schnittansicht längs der Linie 4-4 in Figur 3;
- Figur 5:: eine Schnittansicht einer zweiten bevorzugten Ausführungsform einer erfindungsgemäßen Radwaschvorrichtung in der Figur 4 entsprechender Weise und
- Figur 6:: eine Getriebeeinrichtung einer dritten bevorzugten Ausführungsform einer erfindungsgemäßen Radwaschvorrichtung in perspektivischer Explosionsdarstellung.

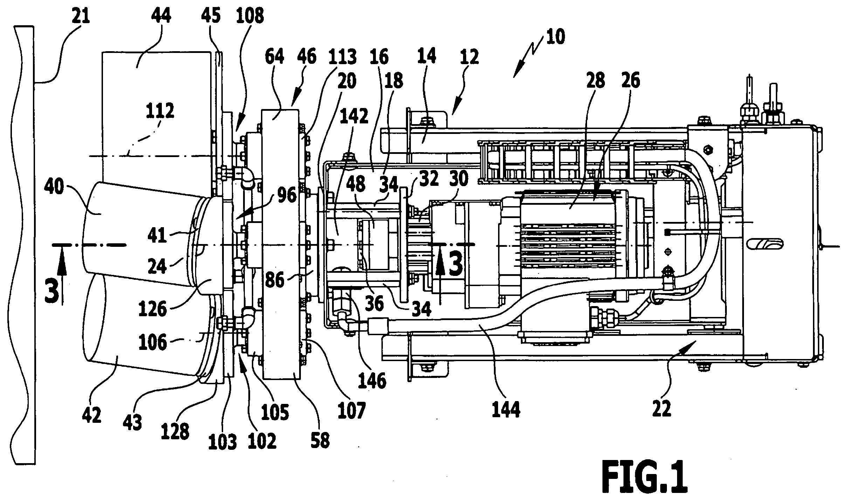

Figur 1 zeigt in Draufsicht eine erste bevorzugte Ausführungsform einer insgesamt mit dem Bezugszeichen 10 belegten erfindungsgemäßen Radwaschvorrichtung zum Reinigen insbesondere von Kraftfahrzeugrädern.

Die Radwaschvorrichtung 10 umfasst eine Trageinrichtung 12 mit einem feststehenden Trägerteil 14 sowie einem relativ dazu beweglichen Trägerteil 16. Das feststehende Trägerteil 14 ist beispielsweise eine an sich bekannte Rahmenkonstruktion, mittels derer die Radwaschvorrichtung 10 auf einer geeigneten Aufstellfläche festgelegt werden kann, beispielsweise eines Montagesockels in einer Kraftfahrzeugwaschhalle. Das bewegliche Trägerteil 16 kann ebenfalls als Rahmenkonstruktion oder, wie im vorliegenden Fall, als eine Art Schubladenkonstruktion ausgestaltet sein mit einer horizontalen Grundplatte 18, die endseitig in eine vertikale Frontplatte 20 übergeht.

Orts- und Richtungsangaben wie beispielsweise "oben", "unten", "horizontal", "vertikal" oder dergleichen sind vorliegend als auf eine Gebrauchsstellung der Radwaschvorrichtung 10 bezogen aufzufassen, in der die Frontplatte 18 parallel zu einer üblicherweise horizontalen
Aufstellfläche für die Radwaschvorrichtung 10 und damit horizontal ausgerichtet ist. "Vorne" und "Vorderseite" beziehen sich vorliegend jeweils auf eine einem zu reinigenden Rad 21 zugewandte Seite der Radwaschvorrichtung 10 oder eines Teils davon, und "hinten" oder "Rückseite" bezieht sich vorliegend auf eine dem zu reinigenden Rad 21 abgewandte Seite der Radwaschvorrichtung 10 oder eines Teils davon.

Das bewegliche Trägerteil 16 ist am feststehenden Trägerteil 14 auf an sich bekannte Weise beweglich gelagert. Mittels eines Rollenantriebs 22 kann das bewegliche Trägerteil 16 relativ zum feststehenden Trägerteil 14 längs einer horizontal ausgerichteten Zentralachse 24 bewegt werden. Dies erlaubt es, das bewegliche Trägerteil 16 einschließlich der nachfolgend erläuterten daran befestigten Komponenten der Radwaschvorrichtung 10 an das zu reinigende Rad 21 anzunähern und von diesem zurückzuziehen.

Am Trägerteil 16 ist eine Antriebseinrichtung 26 umfassend einen Antriebsmotor 28 festgelegt. Zu diesem Zweck umfasst der Antriebsmotor 28 auf einer der Frontplatte 20 zugewandten Seite einen an einem Motorgehäuse 30 angeformten Haltering 32. Der Haltering 32 ist mit schrauben- oder bolzenförmigen Verbindungselementen 34 fest mit der Frontplatte 20 verbunden. Allerdings ist der Haltering 32 relativ zur Frontplatte 20 beabstandet, so dass zwischen dieser und dem Haltering 32 ein Zwischenraum 36 gebildet ist.

Eine Antriebswelle 38 des Antriebsmotors 28 definiert die bereits erwähnte Zentralachse 24 der Radwaschvorrichtung 10. Mittels der Antriebswelle 38 sind drei von der Radwaschvorrichtung 10 umfasste Waschbürsten 40, 42 und 44 auf nachfolgend beschriebene Weise drehend antreibbar, und zwar jeweils um sich selbst sowie gemeinsam um die Zentralachse 24. Die Waschbürsten 40, 42 und 44 umfassen Bürstenteller 41, 43 bzw. 45, an denen in bekannter Weise schematisch dargestellte Waschborsten befestigt sind.

Zur Übertragung einer Antriebskraft von der Antriebswelle 38 auf die Waschbürsten 40, 42 und 44 weist die Radwaschvorrichtung 10 eine Getriebeeinrichtung 46 auf.

Die Antriebswelle 38 durchsetzt den Haltering 32 und ragt in den Zwischenraum 36 hinein. Endseitig ist an die Antriebswelle 38 eine Kopplungshülse 48 der Getriebeeinrichtung 46 drehfest an die Antriebswelle 38 angekoppelt. Auf ihrer Vorderseite ist an die Kopplungshülse 48 eine Getriebewelle 50 drehfest angeflanscht, deren Achse mit der Zentralachse 24 der Antriebswelle 38 zusammenfällt. Die Getriebewelle 50 erstreckt sich vom Zwischenraum 36 durch eine in der Frontplatte 20 gebildete Durchgangsöffnung 52 hindurch und ragt dadurch über das bewegliche Trägerteil 16 hinaus in Richtung des zu reinigenden Rades 21.

An ihrem der Kopplungshülse 48 abgewandten vorderen Ende ist die Getriebewelle 50 mit einer von der Getriebeeinrichtung 46 umfassten Nabe 54 drehfest verbunden. Die Verbindung erfolgt vorliegend mittels einer Nut-Passfeder-Verbindung, wovon auch eine Passfeder 56 dargestellt ist.

Die Getriebeeinrichtung 46 umfasst ferner ein Getriebegehäuse 58, das trommelförmig ausgestaltet ist. Das Getriebegehäuse 58 weist eine plattenförmige, runde vordere Gehäusewand 60 auf sowie eine im Abstand dazu angeordnete und ebenfalls plattenförmige sowie runde hintere Gehäusewand 62. Die vordere Gehäusewand 60 ist dem zu reinigenden Rad 21 zugewandt, die hintere Gehäusewand 62 dem zu reinigenden Rad 21 abgewandt und ihrerseits der Frontplatte 20 des beweglichen Trägerteils 16 zugewandt.

Ferner weist das Getriebegehäuse 58 eine die Gehäusewände 60 und 62 miteinander verbindende und die Zentralachse 24 ringförmig umlaufende Seitenwand 64 auf. Außerdem sind die Gehäusewände 60 und 62 mittels einer Mehrzahl von beispielsweise bolzenförmigen Verbindungselementen 66, die in Umfangsrichtung der Zentralachse 24 angeordnet sind, miteinander verbunden.

Das Getriebegehäuse 58 fasst einen gegenüber Schmutz und Reinigungsflüssigkeit abgedichteten Gehäuseinnenraum 68 ein, der zentral von der Getriebewelle 50 durchsetzt wird und in den auch die Nabe 54 eingreift. Die Nabe 54 ist auf ihrer der Frontplatte 20 abgewandten Vorderseite drehfest mit der vorderen Gehäusewand 60 verbunden, beispielsweise durch Verschraubung (nicht gezeigt). Dies gibt die Möglichkeit, das Getriebegehäuse 58 um die Zentralachse 24 drehend anzutreiben. Zu diesem Zweck treibt die Antriebswelle 38 die Kopplungshülse 48, die Getriebewelle 50, die Nabe 54 und somit das Getriebegehäuse 58 an.

Die weitere Übertragung der Antriebskraft der Antriebswelle auf die Waschbürsten 40 bis 44 erfolgt mittels eines Planetengetriebes 70 der Getriebeeinrichtung 46. Das Planetengetriebe 70 weist ein ortsfestes Lagerrad 72 in Gestalt eines mit Außenverzahnung versehenen Sonnenrades 74 auf, dessen Achse mit der Zentralachse 24 zusammenfällt. Das Sonnenrad 74 ist im Gehäuseinnenraum 68 die Getriebewelle 50 und die Nabe 54 umgebend aufgenommen. Durch eine in der hinteren Gehäusewand 62 gebildete Durchgangsöffnung 76 hindurch ist das Sonnenrad 74 mit einem Halteflansch 78 fest verbunden, beispielsweise wie im vorliegenden Fall mit Verbindungselementen 80 in Gestalt von Schrauben. Der Halteflansch 78 umgibt die Getriebewelle 50 ebenfalls und ist seinerseits fest mit der Frontplatte 20 verbunden, beispielsweise mit Verbindungselementen 82 ebenfalls in Gestalt von Schrauben.

An die hintere Gehäusewand 62 angrenzend ist der Halteflansch 78 von einem Lagerring 84 umgeben. Der Lagerring 84 dient zur Lagerung eines Außenringes 86, der den Zwischenraum zwischen der Frontplatte 20 und der hinteren Gehäusewand 62 einnimmt, mit welcher er mittels schraubenförmiger Verbindungselemente 88 drehfest verbunden ist. Über den Außenring 86 kann sich das Getriebegehäuse 58 somit bei Rotation um die Zentralachse 24 am Halteflansch 78 abstützen.

Das Planetengetriebe 70 umfasst weiter drei Planetenräder 90, 92 und 94, die jeweils einer der Waschbürsten 40, 42 bzw. 44 zugeordnet und mit dieser jeweils drehfest gekoppelt sind. Die Planetenräder 90 bis 94 sind ebenfalls im Gehäuseinnenraum 68 aufgenommen und umfassen eine Außenverzahnung. Relativ zum Sonnenrad 74 sind sie jeweils beabstandet, so dass sie mit diesem nicht in Eingriff stehen.

Zur drehfesten Kopplung der Waschbürsten 40 bis 44 mit den Planetenrädern 90 bis 94 sind den Waschbürsten 40, 42 und 44 identisch ausgestaltete Bürstenhalterungen 96, 102 bzw. 108 zugeordnet.

Die Bürstenhalterung 96 ist mit dem Bürstenteller 41 der Waschbürste 40 mittelbar verbunden und weist hierfür ein Halteelement 97 außerhalb des Getriebegehäuses 58 auf. Das Halteelement 97 ist tellerförmig und mit einem Schaft 98 der Bürstenhalterung 96 drehfest verbunden. Der Schaft 98 ist mittels eines Lagerblockes 99, der außenseitig an der vorderen Gehäusewand 60 festgelegt ist, drehbar an dem Getriebegehäuse 58 gelagert. Eine Achse des Schaftes 98 definiert eine Bürstenachse 100 der Waschbürste 40. Der Schaft 98 greift durch die vordere Gehäusewand 60 in den Gehäuseinnenraum 68 ein, und das Planetenrad 90 ist drehfest auf dem Schaft 98 gehalten, so dass die Achse des Planetenrades 90 mit der Achse des Schaftes 98 und somit der Bürstenachse 100 zusammenfällt. Eine weitere Lagerung des Schaftes 98 erfolgt an einem außenseitig an der hinteren Gehäusewand 62 festgelegten Lagerblock 101.

In entsprechender Weise ist die Waschbürste 42 über ihren Bürstenteller 43 und die Bürstenhalterung 102 drehbar am Getriebegehäuse 58 gelagert. Hierfür sind ein entsprechendes Halteelement 103, ein Schaft 104, ein Lagerblock 105 an der Gehäusewand 60 und ein Lagerblock 107 an der Gehäusewand 62 vorgesehen. Das Planetenrad 92 ist drehfest auf den Schaft 104 aufgesetzt, so dass deren gemeinsame Achsen eine Bürstenachse 106 der Waschbürste 42 definieren.

In weiter entsprechender Weise ist die Waschbürste 44 drehbar am Getriebegehäuse 58 gelagert, und zwar mit der Bürstenhalterung 108. Entsprechend zu obigen Ausführungen sind ein Halteelement 109, ein Schaft 110, ein Lagerblock 111 an der Gehäusewand 60 und ein Lagerblock 113 an der Gehäusewand 62 vorgesehen. Das Planetenrad 94 ist drehfest auf den Schaft 110 aufgesetzt. Ihre Achsen fallen zusammen und definieren eine Bürstenachse 112, um die die Waschbürste 44 relativ zum Getriebegehäuse 58 drehbar ist.

Das Getriebegehäuse 58 bildet somit mit den Bürstenhalterungen 96, 102 und 108 einen Planetenträger für die Planetenräder 90, 92 und 94 aus.

Die Bürstenachsen 100, 106 und 112 sowie die Zentralachse 24 sind paarweise parallel zueinander ausgerichtet und verlaufen jeweils horizontal. Von der Zentralachse 24 sind die Bürstenachsen 100, 106 und 112 identisch weit beabstandet, und in deren Umfangsrichtung weisen je zwei Bürstenachsen 100, 106 und 112 einen identischen Winkelabstand voneinander auf.

Wie bereits erwähnt, können das Getriebegehäuse 58 und damit die Waschbürsten 40, 42 und 44 unter Antrieb durch die Antriebswelle 38 um die Zentralachse 24 in Rotation versetzt werden. Zusätzlich können durch das Planetengetriebe 70 die Waschbürsten 40, 42 und 44 in Eigenrotation um die jeweiligen Bürstenachsen 100, 106 bzw. 112 versetzt werden. Zu letzterem Zweck weist das Planetengetriebe 70 ein Zugkraftübertragungselement 114 auf. Dieses ist vorliegend ausgestaltet in Form eines Antriebsriemens 116, der, dies ist in der Zeichnung nicht dargestellt, bezüglich der Zentralachse 24 eine Innenverzahnung aufweist und dementsprechend ein Zahnriemen ist.

Der Antriebsriemen 116 steht mit dem Sonnenrad 74 sowie jeweils mit der der Zentralachse 24 abgewandten Seite der Planetenräder 90 bis 94 in formschlüssigem Eingriff. Dies ermöglicht es, das Sonnenrad 74 mit den Planetenrädern 90 bis 94 zu koppeln, indem Zugkräfte zwischen dem Sonnenrad 74 und den Planetenrädern 90 bis 94 übertragen werden. Die Getriebeeinrichtung 46 kann, um eine hinreichende Spannung des Antriebsriemens 116 zu gewährleisten, eines oder mehrere Spannelemente 118 und 120 umfassen. Die Spannelemente 118 und 122 sind ausgestaltet als Spannrollen 122 bzw. 124 nahe den Planetenrädern 90 und 92. Die Spannrollen 122 und 124 können an den Antriebsriemen 116 auf dessen der Zentralachse 24 abgewandten Seite angelegt werden, so dass der Antriebsriemen 116 stets hinreichend unter Spannung steht und dessen Eingriff mit dem Sonnenrad 74 sowie den Planetenrädern 90 bis 94 gewährleistet ist.

Bei einer Drehung des Getriebegehäuses 58 um die Zentralachse 24 wälzt sich der Antriebsriemen 116 sowohl am feststehenden Sonnenrad 74, das das Lagerrad 72 bildet, als auch an den am Getriebegehäuse 58 jeweils drehbar gelagerten Planetenrädern 90, 92 und 94 ab. Dies führt dazu, dass unter der Drehung des Getriebegehäuses 58 um die Zentralachse 24 die Planetenräder 90, 92 und 94 und damit die Waschbürsten 40, 42 bzw. 44 zugleich in Rotation um die Bürstenachsen 100, 106 bzw. 112 versetzt werden.

Die vorstehenden Ausführungen verdeutlichen, dass das Planetengetriebe 70 als solches aufgrund der Rotation der Planetenräder 90, 92 und 94 um die Zentralachse und um die Bürstenachsen 100, 106 bzw. 112 angesehen wird, auch wenn die Planetenräder 90, 92 und 94 dabei nicht am Sonnenrad 74 abwälzen und die Kraftübertragung statt dessen über den Antriebsriemen 116 erfolgt.

Die Planetenräder 90, 92 und 94 sind von gleichem Durchmesser und weisen eine identische Anzahl von Zähnen auf. Aus diesem Grund sind die Drehzahlen der Waschbürsten 40, 42 und 44 identisch und betragen beispielsweise ungefähr 160 Umdrehungen pro Minute bei einer Drehzahl der Antriebswelle 38 von ungefähr 30 Umdrehungen pro Minute. Die Drehzahl des Getriebegehäuses 58 und damit der Waschbürsten 40, 42 und 44 um die Zentralachse 24 entspricht dementsprechend ebenfalls ungefähr 30 Umdrehungen pro Minute.

Nachfolgend wird näher auf die Waschbürsten 40, 42 und 44 eingegangen. Die Waschbürsten 40 und 42 sind identisch ausgestaltet und weisen Bürstenteller 41 bzw. 43 von jeweils ungefähr 11 cm Durchmesser auf. Der Bürstenteller 41 ist bezüglich der Bürstenachse 100 der Waschbürste 40 schief ausgerichtet, d.h. er nimmt relativ zur Bürstenachse 100 einen Winkel abweichend von 90° ein. Vorliegend beträgt der Winkel zwischen der Bürstenachse 100 und dem Bürstenteller 41 ungefähr 75°. Dies wird dadurch erreicht, dass zwischen dem Bürstenteller 41 und dem Halteelement 97 der Bürstenhalterung 96 ein keilförmiges Zwischenglied 126 angeordnet ist. Über das Zwischenglied 126 ist das senkrecht zur Bürstenachse 100 ausgerichtete Halteelement 97 mittelbar mit dem Bürstenteller 41 verbunden.

In entsprechender Weise ist zwischen dem Halteelement 103 der Bürstenhalterung 102 und dem Bürstenteller 43 der Waschbürste 42 ein keilförmiges Zwischenglied 128 angeordnet. Dadurch ist der Bürstenteller 43 ebenfalls um einen Winkel von ungefähr 75° bezüglich der Bürstenachse 106 geneigt.

Demgegenüber ist der Bürstenteller 45 der Waschbürste 44 senkrecht zur Bürstenachse 112 ausgerichtet. Der Bürstenteller 45 weist einen Durchmesser von ungefähr 15 cm auf. Dies ist weniger als der Abstand der Bürstenachse 112 von der Zentralachse 24, so dass die Waschbürste 44 die Zentralachse 24 im Querschnitt überdeckt.

Mittels der erfindungsgemäßen Radwaschvorrichtung 10 kann eine wirkungsvolle Reinigung des zu reinigenden Rades erzielt werden. Dies wird dadurch erreicht, dass die Waschbürsten 40, 42 und 44 jeweils um ihre eigenen Bürstenachsen 100, 106 bzw. 112 und gleichzeitig und gemeinsam um die Zentralachse 24 rotieren können. Als vorteilhaft hat sich dabei erwiesen, dass die Eigendrehzahlen der Waschbürsten 40, 42 und 44 wesentlich größer sind als die gemeinsame Drehzahl um die Zentralachse 24. Selbst komplex gestaltete Strukturen wie Hinterschnitte und Vertiefungen insbesondere in Leichtmetallfelgen können dadurch wirkungsvoll gereinigt werden.

Eine Steigerung der Reinigungswirkung wird insbesondere auch durch die Schiefstellung der Waschbürsten 40 und 42 erzielt. Aufgrund der Zwischenglieder 126 und 128 führen die Waschbürsten 40 und 42 bei der Eigenrotation eine Taumelbewegung aus, die eine noch wirkungsvollere Reinigung komplex gestalteter Strukturen des zu reinigenden Rades ermöglicht. Durch die Taumelbewegung können die Waschbürsten 40 und 42 sehr gut in Vertiefungen der Felge des zu reinigenden Rades eindringen und diese reinigen. Auch eine wirkungsvolle Reinigung des Felgenbettes ist möglich.

Zur weiteren Steigerung der Reinigungswirkung der Radwaschvorrichtung 10 ist eine Reinigungsflüssigkeitsverteilungseinrichtung 130 vorgesehen. Die Reinigungsflüssigkeitsverteilungseinrichtung 130 ist drehfest an das der Antriebswelle 38 abgewandte vordere Ende der Getriebewelle 50 angekoppelt, und zwar mittels eines Flüssigkeitsverteilungsgliedes 132. Das Flüssigkeitsverteilungsglied 132 greift endseitig in die als Hohlwelle ausgestaltete Getriebewelle 50 ein. An seinem gegenüberliegenden Ende stehen vom Flüssigkeitsverteilungsglied 132 drei Sprüharme 134 der Reinigungsflüssigkeitsverteilungseinrichtung 130 strahlenförmig bezüglich der Zentralachse 24 ab. Die Sprüharme 134 stehen jeweils bezüglich der Zentralachse 24 auf Lücke mit den Waschbürsten 40, 42 und 44. An ihren freien Enden sind jeweils Austrittsdüsen 136 angeordnet, die in Richtung des zu reinigenden Rades weisen.

Die Getriebewelle 50 weist in ihrer Eigenschaft als Hohlwelle eine Austrittsöffnung 138 für Reinigungsflüssigkeit an ihrer der Antriebswelle 38 abgewandten Seite auf. Ferner weist die Getriebewelle 50 eine Eintrittsöffnung 140 für Reinigungsflüssigkeit auf, die etwa mittig zwischen der Kopplungshülse 48 und der Frontplatte 20 angeordnet ist. Zwischen der Frontplatte 20 und der Kopplungshülse 48 ist die Getriebewelle 50 von einer ringförmigen Anschlusshülse 142 umgeben. An die Anschlusshülse 142 ist eine Zuführleitung 144 für Reinigungsflüssigkeit mittels eines Anschlusselementes 146 angeschlossen. Als Reinigungsflüssigkeit kommt vorliegend Wasser zum Einsatz, dem zur Steigerung der Reinigungswirkung eine Reinigungschemikalie zugesetzt sein kann. Die Reinigungsflüssigkeit kann durch die Zuführleitung 144, das Anschlusselement 146 und die Anschlusshülse 142 in die Getriebewelle 50 eintreten und durch diese hindurch in die Reinigungsflüssigkeitsverteilungseinrichtung 130 fließen und von dieser auf das zu reinigende Rad abgegeben werden.

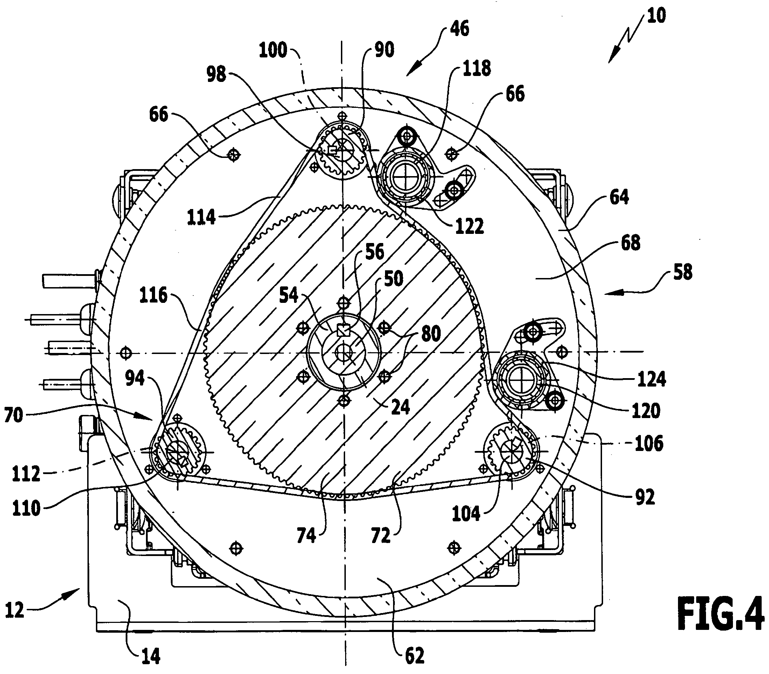

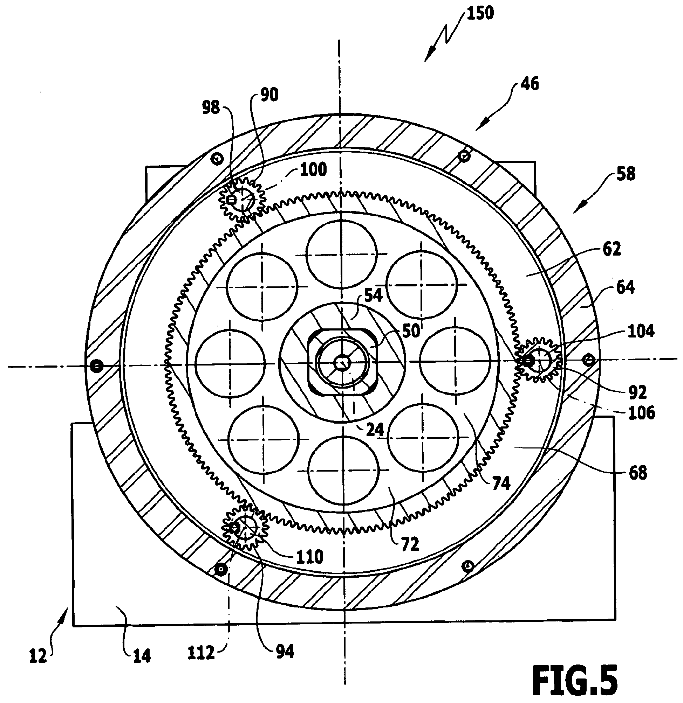

Figur 5 zeigt in einer der Figur 4 entsprechenden Weise vereinfacht eine Schnittdarstellung einer zweiten bevorzugten und mit dem Bezugszeichen 150 belegten Ausführungsform einer erfindungsgemäßen Radwaschvorrichtung. Merkmale oder Bauteile der Radwaschvorrichtungen 10 und 150, die gleich oder gleichwirkend sind, sind mit denselben Bezugszeichen belegt. Die mit der Radwaschvorrichtung 10 erzielbaren Vorteile können mit der Radwaschvorrichtung 150 ebenfalls erzielt werden.

Im Gegensatz zur Radwaschvorrichtung 10 sind die Planetenräder 90, 92 und 94 der Radwaschvorrichtung 150 in dauerhaftem Eingriff mit dem feststehenden Sonnenrad 74. Wird das Getriebegehäuse 58 der Radwaschvorrichtung 150 angetrieben, führt dies ebenfalls zur Rotation der Planetenräder 90, 92 und 94 um die Zentralachse 24. Zusätzlich kämmen die Planetenräder 90, 92 und 94 mit dem Sonnenrad 74, so dass sie in Eigenrotation versetzt werden. Dies führt zur Rotation der Waschbürsten 40, 42 und 44 um die Bürstenachsen 100, 106 bzw. 112, während das Getriebegehäuse 58 um die Zentralachse 24 rotiert.

Im Übrigen funktioniert die Radwaschvorrichtung 150 ebenso wie die Radwaschvorrichtung 10, so dass diesbezüglich auf oben stehende Ausführungen verwiesen werden kann.

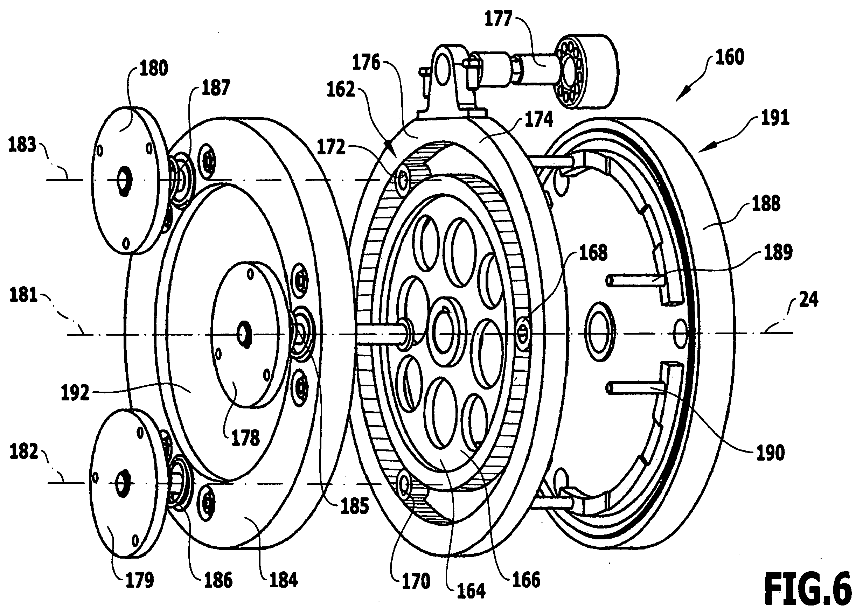

Figur 6 zeigt in perspektivischer Explosionsdarstellung eine Getriebeeinrichtung 160 einer dritten bevorzugten Ausführungsform einer erfindungsgemäßen Radwaschvorrichtung, die im Übrigen in Figur 6 nicht dargestellt ist. Die Getriebeeinrichtung 160 kann beispielsweise bei der Radwaschvorrichtung 10 anstelle der Getriebeeinrichtung 46 zum Einsatz kommen und dementsprechend von der Antriebswelle 38 des Antriebsmotors 28 angetrieben werden.

Die Getriebeeinrichtung 160 umfasst ein Planetengetriebe 162 mit einem Antriebsrad 164. Das Antriebsrad 164 ist ausgestaltet als Sonnenrad 166, dessen Achse mit der Zentralachse 24 zusammenfällt. Das Sonnenrad 166 ist umgeben von drei Planetenrädern 168, 170 und 172, die jeweils am Sonnenrad 166 abwälzen können. Die Planetenräder 168, 170 und 172 sind ihrerseits umgeben von einem Lagerrad 174 in Gestalt eines Hohlrades 176, an dem sie ebenfalls abwälzen können. Das Hohlrad 176 weist eine Innenverzahnung auf, und das Sonnenrad sowie die Planetenräder 168 bis 172 weisen jeweils Außenverzahnungen auf, d.h. das Sonnenrad 166, die Planetenräder 168 bis 172 und das Hohlrad 176 sind jeweils miteinander kämmende Zahnräder.

Das Hohlrad 176 ist mittels einer parallel zur Zentralachse 24 verlaufenden Verdrehsicherung 177 an der Trageinrichtung 12 festlegbar. Beispielsweise ist die Verdrehsicherung 177 mit dem beweglichen Trägerteil 16, insbesondere dessen Frontplatte 20, fest verbunden.

Die Planetenräder 168, 170 und 172 sind drehfest mit Bürstenhalterungen 178, 179 bzw. 180 verbunden, und zwar in einer Weise, wie dies vorliegend im Fall der Radwaschvorrichtung 10 und deren Bürstenhalterungen 96, 102 und 108 erläutert wurde. In Aufbau und Funktion entsprechen die Bürstenhalterungen 178 bis 180 den Bürstenhalterungen 96, 102 bzw. 108, so dass diesbezüglich auf obige Ausführungen verwiesen werden kann.

Die Bürstenhalterungen 178, 179 und 180 sind jeweils um eine von ihnen definierte Achse 181, 182 bzw. 183 drehbar an einem Haltering 184 der Getriebeeinrichtung 160 gelagert. Die Achsen 181, 182 und 183 und die Zentralachse 24 sind jeweils paarweise parallel zueinander ausgerichtet. Jede der Achsen 181, 182 und 183 weist von der Zentralachse 24 denselben Abstand auf, und zudem sind die Achsen 181, 182 und 183 in Umfangsrichtung der Zentralachse 24 über gleiche Winkelabstände verteilt.

An den Bürstenhalterungen 178, 179 und 180 können wie im Fall der Radwaschvorrichtung 10 Waschbürsten festgelegt werden, beispielsweise die Waschbürsten 40, 42 und 44, deren Bürstenteller ebenfalls schief bezüglich der jeweiligen Achse 181, 182 bzw. 183 ausgerichtet sein können. Die Achsen 181, 182 und 183 definieren Bürstenachsen der Waschbürsten.

Entgegen dem Haltering 184 sind die Bürstenhalterungen 178, 179 und 180 weiter unter der Vorspannung eines jeweiligen federnden Vorspannelementes 185, 186 bzw. 187 axial vorgespannt. Bei den Vorspannelementen 185, 186 und 187 handelt es sich um Schraubenfedern. Durch axialen Druck auf die Bürstenhalterungen 178, 179 und 180, der vom zu reinigenden Rad 21 auf die Waschbürsten übertragen werden kann, können die Waschbürsten längs der Achsen 181, 182 bzw. 183 verschoben werden.

Im Betrieb der Radwaschvorrichtung können die Waschbürsten an den Bürstenhalterungen 178, 179 und 180 mit einem vorgesehenen Anpressdruck gegen das zu reinigende Rad 21 unter Verkürzung der Schraubenfedern gedrückt werden. Entfällt der Anpressdruck an.einer Waschbürste, weil diese beispielsweise während der Drehung um die Zentralachse 24 zwischen zwei Speichen einer Felge des Rades 21 gelangt, entspannt sich die jeweilige Schraubenfeder. Dies führt zu einer axialen Bewegung der Waschbürste, so dass auch die Seiten der Speichen und das Felgenbett abgereinigt werden.

Außerdem kann durch die Vorspannelemente 185, 186 und 187 die Gefahr einer Beschädigung des Rades 21 verringert werden, wird die Getriebeeinrichtung 160 mit übermäßigem Anpressdruck an das Rad 21 gedrückt.

Auch bei den Radwaschvorrichtungen 10 und 150 kann vorgesehen sein, dass deren Bürstenhalterungen 96, 102 und 108 mit Vorspannelementen axial entgegen dem Getriebegehäuse 58 vorgespannt sind und relativ zu diesem verschoben werden können, damit auch bei diesen die vorstehend erwähnten Vorteile erzielt werden können.

Auf der dem Haltering 184 gegenüberliegenden Seite des Planetengetriebes 162 umfasst die Getriebeeinrichtung 160 ein im Wesentlichen plattenförmiges und rundes Trägerteil 188. Vom Trägerteil 188 stehen parallel zur Zentralachse 24 je Planetenrad 168, 170 und 172 zwei zapfenförmige Verbindungselemente 189 und 190 in Richtung des Halterings 184 ab. Die Verbindungselemente 189 und 190 können den Zwischenraum zwischen dem Sonnenrad 166 und dem Hohlrad 176 durchsetzen und mit dem Haltering 184 fest verbunden werden. Das Planetengetriebe 162 ist dann zwischen dem Trägerteil 188 und dem Haltering 184 aufgenommen, die gewissermaßen ein Getriebegehäuse 191 und gleichzeitig einen Planetenträger ausbilden. Das Getriebegehäuse 191 weist zusätzlich ein in der Zeichnung nicht dargestelltes Abdeckelement auf, das plattenförmig ausgestaltet ist und eine zentrale Durchgangsöffnung 192 des Halterings 184 abdecken kann.

Bei der Getriebeeinrichtung 160 durchgreift die Antriebswelle 38 (nicht gezeigt) das Trägerteil 188 zentral und ist drehfest mit dem Sonnenrad 166 verbunden. Wird das Sonnenrad 166 in Rotation um die Zentralachse 24 versetzt, kämmen die Planetenräder 168, 170 und 172 mit dem Sonnenrad 166. Dies führt zur Eigenrotation der an den Bürstenhalterungen 178, 179 und 180 festgelegten Waschbürsten um die Achsen 181, 182 bzw. 183.

Da die Planetenräder 168, 170 und 172 zusätzlich mit dem feststehenden Hohlrad 170 kämmen, führen sie jeweils eine Drehbewegung um die Zentralachse 24 aus. Es dreht sich dabei das Getriebegehäuse 191, also insbesondere das Trägerteil 188 und der Haltering 184.

Unter Einsatz der Getriebeeinrichtung 160 bei der Radwaschvorrichtung 10 können somit ebenfalls die bereits im Zusammenhang mit der Erläuterung der Radwaschvorrichtung 10 erwähnten Vorteile erzielt werden.

## Patentansprüche

1. Radwaschvorrichtung (10; 150), umfassend mindestens zwei Waschbürsten (40, 42, 44), die jeweils um eine Bürstenachse (100, 106, 112) drehend antreibbar sind, wobei sich die Bürstenachsen (100, 106, 112) der mindestens zwei Waschbürsten (40, 42, 44) voneinander unterscheiden, wobei die mindestens zwei Waschbürsten (40, 42, 44) um eine gemeinsame und von den Bürstenachsen (100, 106, 112) unterschiedliche Zentralachse (24) drehend antreibbar sind, **dadurch gekennzeichnet, dass** mindestens eine Waschbürste (40, 42) einen schief zu ihrer Bürstenachse (100, 106) ausgerichteten Bürstenteller (41, 43) aufweist.

2. Radwaschvorrichtung nach Anspruch 1, **dadurch gekennzeichnet, dass** die Radwaschvorrichtung (10; 150) drei oder mehr Waschbürsten (40, 42, 44) umfasst.

3. Radwaschvorrichtung nach Anspruch 1 oder 2, **dadurch gekennzeichnet, dass** mindestens zwei Waschbürsten (40, 42, 44) unterschiedlich groß ausgebildet sind.

4. Radwaschvorrichtung nach einem der voranstehenden Ansprüche, **dadurch gekennzeichnet, dass** mindestens zwei Waschbürsten (40, 42, 44) identisch zueinander ausgebildet sind.

5. Radwaschvorrichtung nach einem der voranstehenden Ansprüche, **dadurch gekennzeichnet, dass** die Radwaschvorrichtung (10; 150) mindestens zwei unterschiedlich große Waschbürsten (40, 42, 44) umfasst, von denen die größere Waschbürste (44) einen senkrecht zu ihrer Bürstenachse (112) ausgerichteten Bürstenteller (45) aufweist und von denen die kleinere Waschbürste (40, 42) einen schief zu ihrer Bürstenachse (100, 106) ausgerichteten Bürstenteller (41, 43) aufweist.

6. Radwaschvorrichtung nach einem der voranstehenden Ansprüche, **dadurch gekennzeichnet, dass** Waschbürsten (40, 42) gleicher Größe jeweils um denselben schiefen Winkel relativ zur jeweiligen Bürstenachse (100, 106) ausgerichtete Bürstenteller (41, 43) aufweisen.

7. Radwaschvorrichtung nach einem der voranstehenden Ansprüche, **dadurch gekennzeichnet, dass** die Bürstenachsen (100, 106, 112) von mindestens zwei Waschbürsten (40, 42, 44) parallel zueinander ausgerichtet sind.

8. Radwaschvorrichtung nach einem der voranstehenden Ansprüche, **dadurch gekennzeichnet, dass** mindestens eine Bürstenachse (100, 106, 112) parallel zur Zentralachse (24) ausgerichtet ist.

9. Radwaschvorrichtung nach einem der voranstehenden Ansprüche, **dadurch gekennzeichnet, dass** die Radwaschvorrichtung (10; 150) eine Antriebseinrichtung (26) sowie eine die Antriebseinrichtung (26) mit den mindestens zwei Waschbürsten (40, 42, 44) koppelnde Getriebeeinrichtung (46; 160) zum Antreiben der Waschbürsten (40, 42, 44) um deren jeweilige Bürstenachse (100, 106, 112) aufweist.

10. Radwaschvorrichtung nach Anspruch 9, **dadurch gekennzeichnet, dass** die Getriebeeinrichtung (46; 160) ein Planetengetriebe (70; 162) umfasst, das jeweils mit einer Waschbürste (40, 42, 44) gekoppelte und um die Zentralachse (24) rotierbare Planetenräder (90, 92, 94; 168, 170, 172) aufweist.

11. Radwaschvorrichtung nach Anspruch 10, **dadurch gekennzeichnet, dass** die Getriebeeinrichtung (46; 160) einen Planetenträger (58; 191) umfasst, an dem die Planetenräder (90, 92, 94; 168, 170, 172) drehbar gelagert sind.

12. Radwaschvorrichtung nach Anspruch 10 oder 11, **dadurch gekennzeichnet, dass** das Planetengetriebe (70; 162) ein von der Antriebseinrichtung (26) um die Zentralachse (24) drehend antreibbares Antriebsrad (164) umfasst, an dem die Planetenräder (168, 170, 172) abwälzen.

13. Radwaschvorrichtung nach Anspruch 11, **dadurch gekennzeichnet, dass** der Planetenträger (58; 191) von der Antriebseinrichtung (26) um die Zentralachse (24) drehend antreibbar ist.

14. Radwaschvorrichtung nach Anspruch 13, **dadurch gekennzeichnet, dass** das Planetengetriebe (70) ein Lagerrad (72) umfasst, relativ zu dem die Planetenräder (90, 92, 94) beabstandet sind, sowie mindestens ein das Lagerrad (72) mit den Planetenrädern (90, 92, 94) drehbar koppelndes Zugkraftübertragungselement (114).

15. Radwaschvorrichtung nach Anspruch 14, **dadurch gekennzeichnet, dass** das mindestens eine Zugkraftübertragungselement (114) ein Antriebsriemen (116) ist.

16. Radwaschvorrichtung nach Anspruch 13, **dadurch gekennzeichnet, dass** das Planetengetriebe (70) ein Lagerrad (72) umfasst, an dem die Planetenräder (90, 92, 94) abwälzen.

17. Radwaschvorrichtung nach einem der Ansprüche 9 bis 16, **dadurch gekennzeichnet, dass** die Getriebeeinrichtung (46) eine von der Antriebseinrichtung (26) antreibbare, längs der Zentralachse (24) ausgerichtete Getriebewelle (50) umfasst.

18. Radwaschvorrichtung nach Anspruch 17, **dadurch gekennzeichnet, dass** die Getriebewelle (50) als Hohlwelle ausgestaltet ist mit mindestens einer Eintrittsöffnung (140) für Reinigungsflüssigkeit auf ihrer den mindestens zwei Waschbürsten (40, 42, 44) abgewandten Seite und mindestens einer Austrittsöffnung (138) für Reinigungsflüssigkeit auf ihrer den mindestens zwei Waschbürsten (40, 42, 44) zugewandten Seite.

19. Radwaschvorrichtung nach Anspruch 18, **dadurch gekennzeichnet, dass** die Radwaschvorrichtung (10; 150) eine an der Getriebewelle (50) auf ihrer den Waschbürsten (40, 42, 44) zugewandten Seite gehaltene und über die Getriebewelle (50) mit Reinigungsflüssigkeit beaufschlagbare Reinigungsflüssigkeitsverteilungseinrichtung (130) aufweist.

20. Radwaschvorrichtung nach einem der voranstehenden Ansprüche, **dadurch gekennzeichnet, dass** zumindest eine Waschbürste (44) die Zentralachse (24) im Querschnitt überdeckt.

## Claims

1. Wheel washing apparatus (10; 150), comprising at least two washing brushes (40, 42, 44), each of which is capable of being driven in rotation about a brush axis (100, 106, 112), wherein the brush axes (100, 106, 112) of the at least two washing brushes (40, 42, 44) are different from one another, wherein the at least two washing brushes (40, 42, 44) are capable of being driven in rotation about a common central axis (24) which is different from the brush axes (100, 106, 112), **characterized in that** at least one washing brush (40, 42) has a brush disc (41, 43) that is oriented obliquely with respect to its brush axis (100, 106).

2. Wheel washing apparatus in accordance with claim 1, **characterized in that** the wheel washing apparatus (10; 150) comprises three or more washing brushes (40, 42, 44).

3. Wheel washing apparatus in accordance with claim 1 or 2, **characterized in that** at least two washing brushes (40, 42, 44) are configured to be of differing sizes.

4. Wheel washing apparatus in accordance with any one of the preceding claims, **characterized in that** at least two washing brushes (40, 42, 44) are configured to be identical to each other.

5. Wheel washing apparatus in accordance with any one of the preceding claims, **characterized in that** the wheel washing apparatus (10; 150) comprises at least two washing brushes (40, 42, 44) of differing sizes, with the larger washing brush (44) having a brush disc (45) oriented perpendicular to its brush axis (112) and the smaller washing brush (40, 42) having a brush disc (41, 43) oriented obliquely with respect to its brush axis (100, 106).

6. Wheel washing apparatus in accordance with any one of the preceding claims, **characterized in that** washing brushes (40, 42) of the same size each have brush discs (41, 43) oriented at the same oblique angle relative to the respective brush axis (100, 106).

7. Wheel washing apparatus in accordance with any one of the preceding claims, **characterized in that** the brush axes (100, 106, 112) of at least two washing brushes (40, 42, 44) are oriented parallel to one another.

8. Wheel washing apparatus in accordance with any one of the preceding claims, **characterized in that** at least one brush axis (100, 106, 112) is oriented parallel to the central axis (24).

9. Wheel washing apparatus in accordance with any one of the preceding claims, **characterized in that** the wheel washing apparatus (10; 150) has a drive device (26) and a gear device (46; 160) coupling the drive device (26) to the at least two washing brushes (40, 42, 44) for driving the washing brushes (40, 42, 44) around their respective brush axis (100, 106, 112).

10. Wheel washing apparatus in accordance with claim 9, **characterized in that** the gear device (46; 160) comprises a planetary gear (70; 162) having planet wheels (90, 92, 94; 168, 170, 172), each of which is coupled to a washing brush (40, 42, 44) and rotatable about the central axis (24).

11. Wheel washing apparatus in accordance with claim 10, **characterized in that** the gear device (46; 160) comprises a planet carrier (58; 191) on which the planet wheels (90, 92, 94; 168, 170, 172) are supported for rotation.

12. Wheel washing apparatus in accordance with claim 10 or 11, **characterized in that** the planetary gear (70; 162) comprises a drive wheel (164) which is capable of being driven in rotation about the central axis (24) by the drive device (26) and on which the planet wheels (168, 170, 172) roll.

13. Wheel washing apparatus in accordance with claim 11, **characterized in that** the planet carrier (58; 191) is capable of being driven in rotation about the central axis (24) by the drive device (26).

14. Wheel washing apparatus in accordance with claim 13, **characterized in that** the planetary gear (70) comprises a bearing wheel (72) relative to which the planet wheels (90, 92, 94) are spaced and at least one tractive-force transmission element (114) rotatably coupling the bearing wheel (72) to the planet wheels (90, 92, 94).

15. Wheel washing apparatus in accordance with claim 14, **characterized in that** the at least one tractive-force transmission element (114) is a drive belt (116).

16. Wheel washing apparatus in accordance with claim 13, **characterized in that** the planetary gear (70) comprises a bearing wheel (72) on which the planet wheels (90, 92, 94) roll.

17. Wheel washing apparatus in accordance with any one of claims 9 to 16, **characterized in that** the gear device (46) comprises a gear shaft (50) which is capable of being driven by the drive device (26) and is oriented along the central axis (24).

18. Wheel washing apparatus in accordance with claim 17, **characterized in that** the gear shaft (50) is configured as a hollow shaft having at least one inlet opening (140) for cleaning liquid on the side thereof facing away from the at least two washing brushes (40, 42, 44) and at least one outlet opening (138) for cleaning liquid on the side thereof facing towards the at least two washing brushes (40, 42, 44).

19. Wheel washing apparatus in accordance with claim 18, **characterized in that** the wheel washing apparatus (10; 150) has a cleaning liquid distribution device (130) which is held on the gear shaft (50) on the side thereof facing towards the washing brushes (40, 42, 44) and to which cleaning liquid can be admitted via the gear shaft (50).

20. Wheel washing apparatus in accordance with any one of the preceding claims, **characterized in that** at least one washing brush (44) overlaps the central axis (24) in cross-section.

## Revendications

1. Dispositif de lavage de roues (10; 150) comprenant au moins deux brosses de lavage (40, 42, 44), qui peuvent respectivement être entraînées en rotation autour d'un axe de brosse (100, 106, 112), les axes de brosse (100, 106, 112) desdites au moins deux brosses de lavage (40, 42, 44) étant distincts les uns des autres, et lesdites au moins deux brosses de lavage (40, 42, 44) pouvant être entraînées en rotation autour d'un axe central (24) commun, distinct des axes de brosse (100, 106, 112), **caractérisé en ce qu'**au moins une brosse de lavage (40, 42) présente une disque de brosse (41, 43) orientée de manière inclinée par rapport à son axe de brosse (100, 106).

2. Dispositif de lavage de roues selon la revendication 1, **caractérisé en ce que** le dispositif de lavage de roues (10; 150) comprend trois brosses de lavage (40, 42, 44) ou davantage.

3. Dispositif de lavage de roues selon la revendication 1 ou la revendication 2, **caractérisé en ce qu'**au moins deux brosses de lavage (40, 42, 44) sont de grandeur différente.

4. Dispositif de lavage de roues selon l'une des revendications précédentes, **caractérisé en ce qu'**au moins deux brosses de lavage (40, 42, 44) sont de configuration identique.

5. Dispositif de lavage de roues selon l'une des revendications précédentes, **caractérisé en ce que** le dispositif de lavage de roues (10; 150) comprend au moins deux brosses de lavage (40, 42, 44) de grandeur différente, dont la brosse de lavage (44) la plus grande présente une disque de brosse (45) orientée perpendiculairement à son axe de brosse (112), et dont la brosse de lavage (40, 42) plus petite présente une disque de brosse (41, 43) orientée de manière inclinée par rapport à son axe de brosse (100, 106).

6. Dispositif de lavage de roues selon l'une des revendications précédentes, **caractérisé en ce que** des brosses de lavage (40, 42) de même grandeur présentent des disques de brosse (41, 43) respectives d'un même angle d'inclinaison par rapport à l'axe de brosse respectif (100, 106).

7. Dispositif de lavage de roues selon l'une des revendications précédentes, **caractérisé en ce que** les axes de brosse (100, 106, 112) d'au moins deux brosses de lavage (40, 42, 44) sont d'orientation parallèle.

8. Dispositif de lavage de roues selon l'une des revendications précédentes, **caractérisé en ce qu'**au moins un axe de brosse (100, 106, 112) est d'une orientation parallèle à l'axe central (24).

9. Dispositif de lavage de roues selon l'une des revendications précédentes, **caractérisé en ce que** le dispositif de lavage de roues (10; 150) comporte un dispositif d'entraînement (26) ainsi qu'un dispositif de transmission (46; 160) couplant le dispositif d'entraînement (26) avec lesdites au moins deux brosses de lavage (40, 42, 44), en vue d'entraîner les brosses de lavage (40, 42, 44) autour de leur axe de brosse (100, 106, 112) respectif.

10. Dispositif de lavage de roues selon la revendication 9, **caractérisé en ce que** le dispositif de transmission (46; 160) comprend un train planétaire (70; 162), qui présente des satellites (90, 92, 94; 168, 170, 172) couplés respectivement avec une brosse de lavage (40, 42, 44) et pouvant tourner autour de l'axe central (24).

11. Dispositif de lavage de roues selon la revendication 10, **caractérisé en ce que** le dispositif de transmission (46; 160) comprend un porte-satellites (58; 191) sur lequel sont montés en rotation les satellites (90, 92, 94; 168, 170, 172).

12. Dispositif de lavage de roues selon la revendication 10 ou la revendication 11, **caractérisé en ce que** le train planétaire (70; 162) comprend une roue d'entraînement (164) pouvant être entraînée en rotation autour de l'axe central (24) par le dispositif d'entraînement (26), et sur laquelle roulent les satellites (168, 170, 172).

13. Dispositif de lavage de roues selon la revendication 11, **caractérisé en ce que** le porte-satellites (58 ; 191) peut être entraîné en rotation autour de l'axe central (24) par le dispositif d'entraînement (26).

14. Dispositif de lavage de roues selon la revendication 13, **caractérisé en ce que** le train planétaire (70) comprend une roue de palier (72) dont sont espacés les satellites (90, 92, 94), ainsi qu'au moins un élément de transmission de force de traction (114) assurant le couplage en rotation de la roue de palier (72) avec les satellites (90, 92, 94).

15. Dispositif de lavage de roues selon la revendication 14, **caractérisé en ce que** ledit au moins un élément de transmission de force de traction (114) est une courroie d'entraînement (116).

16. Dispositif de lavage de roues selon la revendication 13, **caractérisé en ce que** le train planétaire (70) comprend une roue de palier (72) sur laquelle roulent les satellites (90, 92, 94).

17. Dispositif de lavage de roues selon l'une des revendications 9 à 16, **caractérisé en ce que** le dispositif de transmission (46) comprend un arbre de transmission (50) pouvant être entraîné par le dispositif d'entraînement (26) et orienté le long de l'axe central (24).

18. Dispositif de lavage de roues selon la revendication 17, **caractérisé en ce que** l'arbre de transmission (50) est conçu sous la forme d'un arbre creux comportant au moins une ouverture d'entrée (140) pour du liquide de nettoyage sur son côté éloigné desdites au moins deux brosses de lavage (40, 42, 44), et au moins une ouverture de sortie (138) pour du liquide de nettoyage sur son côté dirigé vers desdites au moins deux brosses de lavage (40, 42, 44).

19. Dispositif de lavage de roues selon la revendication 18, **caractérisé en ce que** le dispositif de lavage de roues (10; 150) comprend un dispositif de distribution de liquide de nettoyage (130), qui est maintenu sur l'arbre de transmission (50), sur le côté de celui-ci dirigé vers les brosses de lavage (40, 42, 44), et qui peut être alimenté en liquide de nettoyage par l'intermédiaire de l'arbre de transmission (50).

20. Dispositif de lavage de roues selon l'une des revendications précédentes, **caractérisé en ce qu'**au moins une brosse de lavage (44) couvre l'axe central (24), en section transversale.
